# EUROPÄISCHE PATENTSCHRIFT

(11) **EP 3 580 428 B1**
(45) Veröffentlichungstag und Bekanntmachung des Hinweises auf die Patenterteilung: **06.01.2021**
(21) Anmeldenummer: 18701501.1
(22) Anmeldetag: 01.02.2018
(51) Int. Cl.: E21D 7/02, B66B 19/00

(54) **VERFAHREN ZUR FIXIERUNG EINES SCHIENENBÜGELS EINER AUFZUGANLAGE UND AUFZUGANLAGE**
METHOD FOR FIXING A RAIL BRACKET OF A LIFT ASSEMBLY AND LIFT ASSEMBLY
PROCÉDÉ DE FIXATION D'ARCADE ÉTRIER D'UN ASCENSEUR ET ASCENSEUR

(30) Priorität: 08.02.2017 EP 17155105
(43) Veröffentlichungstag der Anmeldung: 18.12.2019
(73) Patentinhaber: Inventio AG, 6052 Hergiswil (CH)
(72) Erfinder: CAMBRUZZI, Andrea, 8057 Zürich (CH); STUDER, Christian, 6010 Kriens (CH); ZIMMERLI, Philipp, 4624 Härkingen (CH); BITZI, Raphael, 6003 Luzern (CH); BÜTLER, Erich, 6030 Ebikon (CH)
(86) Internationale Anmeldenummer: PCT/EP2018/052487
(87) Internationale Veröffentlichungsnummer: WO 2018/145984

(56) Entgegenhaltungen:
- WO-A1-2017/016783
- JP-A- H01 117 190
- JP-A- H01 133 883

## Beschreibung

Die Erfindung betrifft ein Verfahren zur Fixierung eines Schienenbügels einer Aufzuganlage gemäss dem Oberbegriff des Anspruchs 1 und eine Aufzuganlage gemäss dem Oberbegriff des Anspruchs 14.

Die WO 90/15009 A1 beschreibt ein Verfahren zur Fixierung eines Schienenbügels zur Halterung einer Führungsschiene an einer Schachtwand eines Aufzugschachts einer Aufzuganlage. Der Schienenbügel ist aus einem Schienenbügelunterteil und einem Schienenbügeloberteil zusammengesetzt, die mittels Schrauben miteinander verbunden werden. Das Schienenbügelunterteil wird mittels zweier Befestigungselemente, wie beispielsweise Schrauben, Schraubanker oder Schraubbolzen an der Schachtwand, die üblicherweise aus Beton besteht, fixiert. Dazu sind insbesondere Befestigungselemente mit einem Durchmesser von mindestens 10 mm notwendig, für die Löcher mit entsprechendem Durchmesser in der Schachtwand gebohrt werden müssen. Dies ist sehr zeitaufwändig, erzeugt viel Lärm und Schmutz, insbesondere in Form von Bohrstaub. Wenn ein Monteur die Schienenbügel fixiert, ist dies körperlich ausserdem sehr anstrengend. Bei einer Fixierung der Schienenbügel mittels einer mechatronischen Installationskomponente, beispielsweise in Form eines Industrieroboters, muss dieser beim Bohren von Löchern in Beton sehr grosse Kräfte abstützen und darf durch die beim Bohren auftretenden Vibrationen und Schläge nicht beschädigt werden. Dies erfordert eine sehr robuste und damit schwere und auch teure Ausführung der Installationskomponente. Darüber hinaus wird das Bohren der Löcher durch im Beton der Schachtwand befindliche Armierungen in Form von Metallstäben oder Gittern zusätzlich erschwert.

Die JPH01133883A und die JPH01117190A beschreiben Verfahren zur Fixierung einer Führungsschiene einer Aufzuganlage an einer Schachtwand eines Aufzugsschachts. Die Führungsschienen werden mittels eines Schienenbügels, der aus einem Schienenbügelunterteil und einem Schienenbügeloberteil besteht, an der Schachtwand fixiert. Dazu wird das Schienenbügelunterteil an die Schachtwand geschraubt und die beiden Schienenbügelteile mittels einer Schraube-Mutter-Verbindung verbunden. Um ein Verschieben des Schienenbügeloberteils gegenüber dem Schienenbügeloberteil zu verhindern, wird zwischen Schienenbügelunterteil und Schienenbügeloberteil eine Klebstoffschicht aufgebracht; die beiden Schienenbügelteile werden damit miteinander verklebt. Die Klebstoffschicht verstärkt damit die Schraube-Mutter-Verbindung zwischen den beiden Schienenbügelteilen; sie hat aber keine Wirkung auf die Verschraubung des Schienenbügelunterteils an die Schachtwand.

Demgegenüber ist es insbesondere die Aufgabe der Erfindung, ein Verfahren zur Fixierung eines Schienenbügels zur Halterung einer Führungsschiene an einer Schachtwand eines Aufzugschachts einer Aufzuganlage und eine Aufzuganlage vorzuschlagen, bei denen eine Fixierung der Schienenbügel an der Schachtwand besonders einfach ist. Erfindungsgemäss wird diese Aufgabe mit einem Verfahren mit den Merkmalen des Anspruchs 1 und einer Aufzuganlage mit den Merkmalen des Anspruchs 14 gelöst.

Beim erfindungsgemässen Verfahren zur Fixierung eines Schienenbügels zur Halterung einer Führungsschiene an einer Schachtwand eines Aufzugschachts einer Aufzuganlage wird eine Klebstoffschicht aufgebracht, die in einem fixierten Zustand des Schienenbügels zwischen einer Anlagefläche des Schienenbügels und einem endgültigen Fixierungsbereich der Schachtwand angeordnet ist. Der Schienenbügel wird also an die Schachtwand geklebt, wobei er auch zusätzlich durch wenigstens ein Befestigungselement an der Schachtwand fixiert werden kann. Damit müssen keine oder allenfalls nur Löcher mit geringem Durchmesser und Tiefe in die Schachtwand gebohrt werden. Damit entsteht während der Fixierung des Schienenbügels kein oder sehr wenig Bohrstaub und Lärm. Ausserdem ist die körperliche Belastung eines Monteurs sehr gering. Eine mechatronische Installationskomponente, die Schienenbügel an der Schachtwand montiert, muss nicht für die Aufnahme von grossen Kräften, Vibrationen und Schlägen ausgelegt werden, wodurch sie vergleichsweise leicht und kostengünstig ausgeführt werden kann.

Der Schienenbügel weist insbesondere ein Schienenbügelunterteil und ein Schienenbügeloberteil auf, die mittels Schrauben miteinander verbunden werden, wobei das Schienenbügelunterteil an der Schachtwand fixiert wird. Die Verbindung, also insbesondere die Verschraubung ist dabei so ausgeführt, dass die beiden Schienenbügelteile in unterschiedlichen Ausrichtungen zueinander verbunden werden können. Durch die genannten unterschiedlichen Ausrichtungen der beiden Schienenbügelteile wird die Ausrichtung der am Schienenbügeloberteil befestigten Führungsschiene ermöglicht. Die Bezeichnungen Schienenbügelunterteil und Schienenbügeloberteil sollen keine Orientierung der beiden Teile zueinander zum Ausdruck bringen. Die Bezeichnungen sollen lediglich eine eindeutige Unterscheidung zwischen den beiden Teilen sicherstellen. Der Schienenbügel kann auch einstückig ausgeführt sein. In der vorliegenden Anmeldung wird unter einem Schienenbügel damit entweder ein Schienenbügelunterteil oder ein kompletter Schienenbügel verstanden, der einstückig oder aus mehreren Teilen bestehen kann. Der Schienenbügel, beziehungsweise das Schienenbügelunterteil und Schienenbügeloberteil bestehen insbesondere aus Metall, beispielsweise aus Stahlblech.

Die an Schienenbügeln und damit an der Schachtwand fixierten Führungsschienen verlaufen in vertikaler Richtung im Aufzugschacht und dienen in bekannter Weise zur Führung einer Aufzugkabine und eines Gegengewichts während des Betriebs der Aufzuganlage.

Der für die Klebstoffschicht verwendete Kleber kann beispielsweise als ein thixotroper, 2-komponentiger Kleber auf Epoxidharzbasis ausgeführt sein. Die Klebstoffschicht ist insbesondere mehrere Millimeter, beispielsweise zwischen 2 und 15 mm dick. Zwischen der Klebstoffschicht und der Schachtwand und/oder dem Schienenbügel kann eine weitere Schicht, beispielsweise eine Haftschicht angeordnet sein.

Unter der Anlagefläche des Schienenbügels wird die Fläche des Schienenbügels verstanden, die im fixierten Zustand zur Schachtwand orientiert, also hauptsächlich parallel zur Schachtwand verläuft. Der Schienenbügel liegt zumindest über einen Teil der Anlagefläche, die Klebstoffschicht und gegebenenfalls den genannten weiteren Schichten an der Schachtwand an. Die im fixierten Zustand des Schienenbügels mit der Anlagefläche des Schienenbügels korrespondierende Fläche der Schachtwand wird als endgültiger Fixierungsbereich der Schachtwand bezeichnet. Die Anlagefläche des Schienenbügels und der endgültige Fixierungsbereich der Schachtwand sind insbesondere jeweils hauptsächlich rechteckig ausgeführt und weisen beispielsweise Masse von 150-400 mm mal 50-150 mm auf.

Die Klebstoffschicht kann sich über die gesamte Anlagefläche des Schienenbügels oder nur über einen oder mehrere Bereiche der Anlagefläche erstrecken. Der Klebstoff kann insbesondere auf zwei ungefähr gleich grosse Bereiche aufgetragen werden, die im fixierten Zustand des Schienenbügels in horizontaler Richtung möglichst weit aussen an der Anlagefläche des Schienenbügels angeordnet sind. Die Gesamtfläche des Bereichs oder der Bereiche, in denen Klebstoff aufgetragen wird, ist beispielsweise grösser als 1'600 mm², insbesondere grösser als 2'000 mm².

Der Kleber zum Erzeugen der Klebstoffschicht kann entweder auf die Anlagefläche des Schienenbügels oder den endgültigen Fixierungsbereich der Schachtwand oder auf beide aufgetragen werden.

In Ausgestaltung der Erfindung wird ein vorgesehener Fixierungsbereich der Schachtwand überprüft und der vorgesehene Fixierungsbereich wird nur dann als endgültiger Fixierungsbereich ausgewählt, wenn eine vorgegebene Prüfbedingung erfüllt ist. Die Prüfbedingung ist dabei insbesondere so gewählt, dass bei Erfüllung der Prüfbedingung davon ausgegangen werden kann, dass der Schienenbügel am endgültigen Fixierungsbereich sicher fixiert werden kann. Damit wird gewährleistet, dass der Schienenbügel sicher an der Schachtwand fixiert werden kann.

Unter dem vorgesehenen Fixierungsbereich der Schachtwand wird dabei der Bereich verstanden, an dem gemäss einer Arbeitsanweisung oder eines Bauplans der Schienenbügel fixiert werden soll.

Um eine sichere Fixierung des Schienenbügels mittels eines Klebers zu ermöglichen, muss der endgültige Fixierungsbereich möglichst eben, beziehungsweise plan sein und darf keine zu grossen Vorsprünge, Absätze, Löcher oder Ausnehmungen aufweisen. Die Überprüfung des vorgesehenen Fixierungsbereichs kann beispielsweise mittels eines Scanners, insbesondere eines Laserscanners oder einer Kamera mit entsprechender Bildverarbeitung durchgeführt werden.

Bei der Überprüfung wird insbesondere die Ausdehnung der Schachtwand in einer senkrechten Richtung zum Verlauf der Schachtwand, also insbesondere die Ausdehnung in horizontaler Richtung geprüft. Die vorgegebene Prüfbedingung ist insbesondere erfüllt, wenn ein maximaler Unterschied der genannten Ausdehnung der Schachtwand, also der Abstand zwischen der höchsten Erhebung und tiefsten Vertiefung der Schachtwand in Richtung senkrecht zur Schachtwand kleiner als ein Grenzwert ist. Der maximale Unterschied ist dabei die Differenz der maximalen und minimalen Ausdehnung der Schachtwand in der genannten Richtung. Es ist möglich, dass bei der genannten Prüfung kleinere Löcher, beispielsweise bis zu einem Durchmesser von 3 - 5 mm nicht berücksichtigt werden. Der Grenzwert, den der genannte maximale Unterschied der Ausdehnung der Schachtwand nicht überschreiten darf, beträgt beispielsweise 1 bis 3 mm.

In Ausgestaltung der Erfindung ist eine Dicke der aufgebrachten Klebstoffschicht vom Ergebnis der Überprüfung des vorgesehenen Fixierungsbereichs der Schachtwand abhängig. Die Dicke ist insbesondere umso grösser, je grösser die ermittelte Unebenheit des endgültigen Fixierungsbereichs ist. Die Klebstoffschicht kann damit in einem gewissen Rahmen Unebenheiten des endgültigen Fixierungsbereichs ausgleichen und es kann eine sichere Fixierung des Schienenbügels gewährleistet werden. Durch die genannte Abhängigkeit der Dicke der aufgebrachten Klebstoffschicht vom Ergebnis der Überprüfung des vorgesehenen Fixierungsbereichs wird aber nur dann eine dickere Klebstoffschicht aufgebracht, wenn dies auch wirklich notwendig ist. Damit werden einerseits eine sichere Fixierung und gleichzeitig ein möglichst geringer Verbrauch an Klebstoff ermöglicht und damit letztendlich ein sicheres und kostenoptimiertes Fixieren der Schienenbügel.

In Ausgestaltung der Erfindung wird in dem Fall, in dem die vorgegebene Prüfbedingung nicht erfüllt ist, der vorgesehene Fixierungsbereich angepasst. Damit kann mit sehr hoher Wahrscheinlichkeit ein Schienenbügel an einer für die weitere Montage der Aufzuganlage notwendigen Position an der Schachtwand fixiert werden.

Unter einer Anpassung des endgültigen Fixierungsbereichs soll hier verstanden werden, dass seine Position an der der Schachtwand verschoben wird. Damit wird quasi ein möglicher Fixierungsbereich an der Schachtwand gesucht. Dies ist insbesondere bei zweiteiligen Schienenbügeln möglich, da hier durch die oben beschriebene flexible Ausrichtung von Schienenbügeloberteil zu Schienenbügelunterteil bei der Position des Schienenbügelunterteils an der Schachtwand eine gewisse Flexibilität gegeben ist.

Zusätzlich oder alternativ zur Verschiebung des Fixierungsbereichs kann auch seine Form, also seine Abmessungen angepasst werden. Dies kann insbesondere dadurch ermöglicht werden, dass unterschiedliche Typen von Schienenbügeln mit unterschiedlichen Anlageflächen verwendet werden können.

In Ausgestaltung der Erfindung wird in dem Fall, in dem der angepasste vorgesehene Fixierungsbereich über den ursprünglich vorgesehenen Fixierungsbereich hinausgeht, eine erneute Prüfung durchgeführt. Damit wird gewährleistet, dass der Schienenbügel im angepassten Fixierungsbereich sicher fixiert werden kann.

In Ausgestaltung der Erfindung wird der endgültige Fixierungsbereich vor dem Anordnen des Schienenbügels vorbehandelt. Damit kann eine sichere Fixierung des Schienenbügels ermöglicht werden.

Bei der Vorhandlung kann es sich beispielsweise um ein Entfernen kleinerer Vorsprünge, beispielsweise mit Hilfe eines Bohrmeissels, ein Aufrauen des Fixierungsbereichs beispielsweise mittels einer rotierenden (Stahl-)Bürste oder einem Winkelschleifer und/oder ein Aufbringen einer zusätzlichen Schicht, beispielsweise einer Haftschicht handeln.

Alternativ oder zusätzlich kann der endgültige Fixierungsbereich gesäubert werden. Dies kann beispielsweise mittels Pressluft, Absaugen oder Wasser erfolgen. Zusätzlich kann auch die Anlagefläche des Schienenbügels gesäubert, insbesondere von anhaftenden Partikeln befreit und/oder entfettet werden.

Wenn in einem Aufzugschacht mehrere Schienenbügel an der Schachtwand fixiert werden sollen, dann wird insbesondere so vorgegangen, dass zuerst alle endgültigen Fixierungsbereiche im Aufzugschacht aufgeraut werden, dann alle endgültigen Fixierungsbereiche im Aufzugschacht gesäubert werden und anschliessend alle Schienenbügel an den Schachtwänden des Aufzugschachts fixiert werden. Dieses Vorgehen hat den Vorteil, dass beim Aufrauen entstehender Schmutz keine bereits gesäuberten Fixierungsbereiche verschmutzen kann. Insbesondere wird beim Aufrauen und im Speziellen beim Säubern im Aufzugschacht von oben nach unten vorgegangen. Damit ist die Gefahr sehr gering, dass bereits gesäuberte Fixierungsbereiche durch das weitere Säubern von Fixierungsbereichen wieder verschmutzt werden.

In Ausgestaltung der Erfindung wird der Schienenbügel zusätzlich mittels eines Befestigungselements an der Schachtwand fixiert. Damit wird eine besonders sichere Fixierung des Schienenbügels ermöglicht.

Das wenigstens eine Befestigungselement kann als eine Schraube, ein Schraubanker, ein Schraubbolzen oder ein Nagel ausgeführt sein. Das Befestigungselement kann beispielsweise hauptsächlich dazu dienen, dass der Schienenbügel während des notwendigen Aushärtens an seiner gewünschten Position gehalten wird. Darüber hinaus kann das Befestigungselement eine zusätzliche Haltekraft aufbringen, die insbesondere unterhalb der Oberfläche der Schachtwand abgestützt wird. Das dafür notwendige Befestigungselement ist dabei immer kleiner ausgeführt als ein Befestigungselement, das für eine Fixierung des Schienenbügels ohne eine Klebstoffschicht zwischen Schienenbügel und Schachtwand notwendig wäre. Damit ist der Aufwand für das Einbringen des Befestigungselements deutlich einfacher.

In Ausgestaltung der Erfindung wird die Fixierung des Schienenbügels an der Schachtwand mittels einer mechatronischen Installationskomponente ausgeführt. Damit wir eine besonders einfache und schnelle Durchführung des Verfahrens ermöglicht. Die mechatronische Installationskomponente ist insbesondere Teil einer Montagevorrichtung und wird von einer Trägerkomponente der Montagevorrichtung gehalten. Die Trägerkomponente ist dazu ausgelegt, relativ zum Aufzugschacht, d.h. beispielsweise innerhalb des Aufzugschachts, verlagert zu und in verschiedenen Höhen innerhalb des Aufzugschachts positioniert zu werden. Die Installationskomponente ist dazu ausgelegt, zumindest einen Montageschritt, wie beispielsweise das Fixieren der Schienenbügel an der Schachtwand im Rahmen eines Installationsvorgangs der Aufzugsanlage zumindest teilautomatisch, vorzugsweise vollautomatisch, auszuführen. Die Montagevorrichtung mir der Trägerkomponente und der mechatronischen Installationskomponente ist beispielsweise entsprechend der in der WO 2017/016783 A1 beschriebenen Montagevorrichtung ausgeführt.

Die oben genannte Aufgabe wird auch durch eine Aufzuganlage mit einem Aufzugschacht und einer mittels eines Schienenbügels an einer Schachtwand des Aufzugschachts fixierten Führungsschiene gelöst. Erfindungsgemäss ist in einem fixierten Zustand des Schienenbügels zwischen einer Anlagefläche des Schienenbügels und einem endgültigen Fixierungsbereich der Schachtwand eine Klebstoffschicht angeordnet. Dies ermöglicht eine besonders eine einfache und kostengünstige Fixierung des Schienenbügels an die Schachtwand.

Der Schienenbügel ist insbesondere zusätzlich mittels eines Befestigungselements an der Schachtwand fixiert. Dies ermöglicht eine besonders sichere Fixierung des Schienenbügels an der Schachtwand.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine perspektivische Ansicht eines Aufzugschachts einer Aufzuganlage mit einer darin aufgenommenen Montagevorrichtung,
- Fig. 2: eine perspektivische Ansicht einer Montagevorrichtung,
- Fig. 3: einen Ausschnitt eines an der Schachtwand des Aufzugsschachts fixierten Schienenbügels in einer Seitenansicht,
- Fig. 4: einen Ausschnitt einer Schachtwand des Aufzugsschachts mit einem geplanten und einem endgültigen Befestigungsbereich und
- Fig. 5: einen Ausschnitt einer Schachtwand des Aufzugsschachts mit einem geplanten und einem endgültigen Befestigungsbereich in einem zweiten Beispiel.

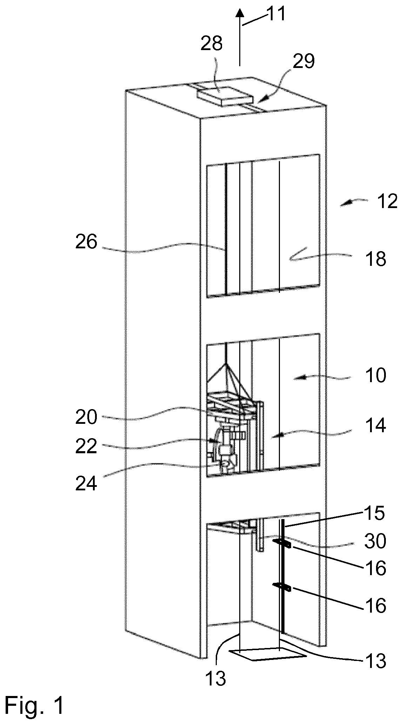

In Fig. 1 ist eine in einem Aufzugschacht 10 einer Aufzuganlage 12 angeordnete Montagevorrichtung 14 dargestellt, mittels welcher Schienenbügelunterteile 16 an einer Schachtwand 18 fixiert werden können. Der Aufzugschacht 10 erstreckt sich in einer Haupterstreckungsrichtung 11, die in der Fig. 1 vertikal ausgerichtet ist. Über die Schienenbügelunterteile 16 werden Führungsschienen der Aufzuganlage 12, von denen in Fig. 1 eine Führungsschiene 15 dargestellt ist, an der Schachtwand 18 fixiert. Die Montagevorrichtung 14 weist eine Trägerkomponente 20 und eine mechatronische Installationskomponente 22 auf. Die Trägerkomponente 20 ist als Gestell ausgeführt, an dem die mechatronische Installationskomponente 22 montiert ist. Dieses Gestell weist Abmessungen auf, die ermöglichen, die Trägerkomponente 20 innerhalb des Aufzugschachts 10 vertikal zu verlagern, das heisst beispielsweise zu unterschiedlichen vertikalen Positionen an verschiedenen Stockwerken innerhalb eines Gebäudes zu verfahren. Die mechatronische Installationskomponente 22 ist im dargestellten Beispiel als Industrieroboter 24 ausgeführt, der nach unten hängend an dem Gestell der Trägerkomponente 20 angebracht ist. Ein Arm des Industrieroboters 24 kann dabei relativ zu der Trägerkomponente 20 bewegt werden und beispielsweise hin zur Schachtwand 18 des Aufzugschachts 10 verlagert werden.

Die Trägerkomponente 20 ist über ein als Tragmittel 26 dienendes Stahlseil mit einer Verlagerungskomponente 28 in Form einer motorisch angetriebenen Seilwinde verbunden, welche oben an dem Aufzugschacht 10 an einer Haltestelle 29 an der Decke des Aufzugschachts 10 angebracht ist. Mithilfe der Verlagerungskomponente 28 kann die Montagevorrichtung 14 innerhalb des Aufzugschachts 10 in Haupterstreckungsrichtung 11 des Aufzugschachts 10, also vertikal über eine gesamte Länge des Aufzugschachts 10 hin verlagert werden.

Die Montagevorrichtung 14 weist ferner eine Fixierkomponente 30 auf, mithilfe derer die Trägerkomponente 20 innerhalb des Aufzugschachts 10 in seitlicher Richtung, das heisst in horizontaler Richtung, fixiert werden kann.

Im Aufzugschacht 10 sind über dessen gesamte Länge zwei Referenzelemente 13 in Form von Schnüren gespannt, die entlang der Haupterstreckungsrichtung 11 ausgerichtet sind. Die Referenzelemente 13 werden von einem Monteur im Aufzugschacht 10 angebracht und bilden die Referenz für die Ausrichtung und Montage von Führungsschienen der Aufzuganlage 12. Die Führungsschienen müssen damit in montiertem Zustand parallel zu den Referenzelementen 13 und in einem bestimmten Abstand zu den Referenzelementen 13 verlaufen.

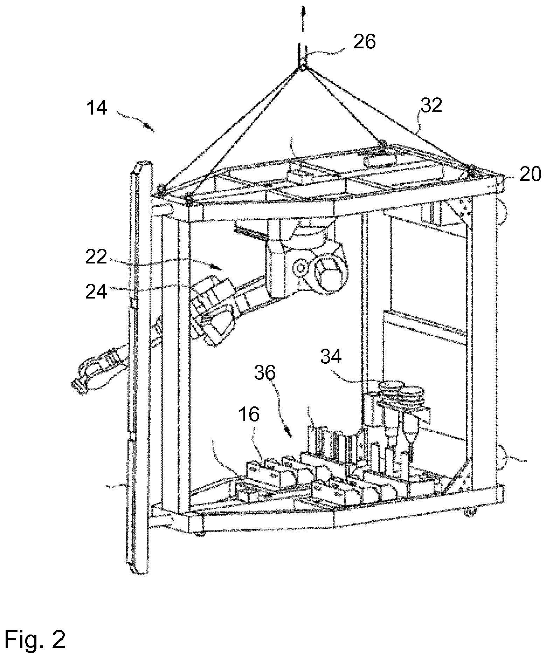

Fig. 2 zeigt eine vergrößerte Ansicht einer Montagevorrichtung 14.

Die Trägerkomponente 20 ist als käfigartiges Gestell ausgebildet, bei dem mehrere horizontal und vertikal verlaufende Holme eine mechanisch belastbare Struktur bilden.

Oben an der käfigartigen Trägerkomponente 20 sind Halteseile 32 angebracht, welche mit dem Tragmittel 26 verbunden werden können.

In der dargestellten Ausführungsform ist die mechatronische Installationskomponente 22 mithilfe eines Industrieroboters 24 ausgeführt. In dem dargestellten Beispiel ist der Industrieroboter 24 mit mehreren um Schwenkachsen verschwenkbaren Roboterarmen ausgestattet. Beispielsweise kann der Industrieroboter mindestens sechs Freiheitsgrade aufweisen, das heisst, ein von dem Industrieroboter 24 geführtes Montagewerkzeug 34 kann mit sechs Freiheitsgraden bewegt werden, das heisst beispielsweise mit drei Rotationsfreiheitsgraden und drei Translationsfreiheitsgraden. Beispielsweise kann der Industrieroboter als Vertikal-Knickarmroboter, als Horizontal-Knickarmroboter oder als SCARA-Roboter oder als kartesischer Roboter bzw. Portalroboter ausgeführt sein.

Der Roboter kann an seinem freitragenden Ende mit verschiedenen Montagewerkzeugen 34 gekoppelt werden. Die Montagewerkzeuge 34 können sich hinsichtlich ihrer Auslegung und ihres Einsatzzweckes unterscheiden. Die Montagewerkzeuge 34 können an der Trägerkomponente 20 derart gehalten werden, dass das freitragende Ende des Industrieroboters 24 an sie herangefahren werden und mit einem von ihnen gekoppelt werden kann. Der Industrieroboter 24 kann hierzu beispielsweise über ein Werkzeugwechselsystem verfügen, das so ausgebildet ist, dass es mindestens die Handhabung mehrerer solcher Montagewerkzeuge 34 ermöglicht.

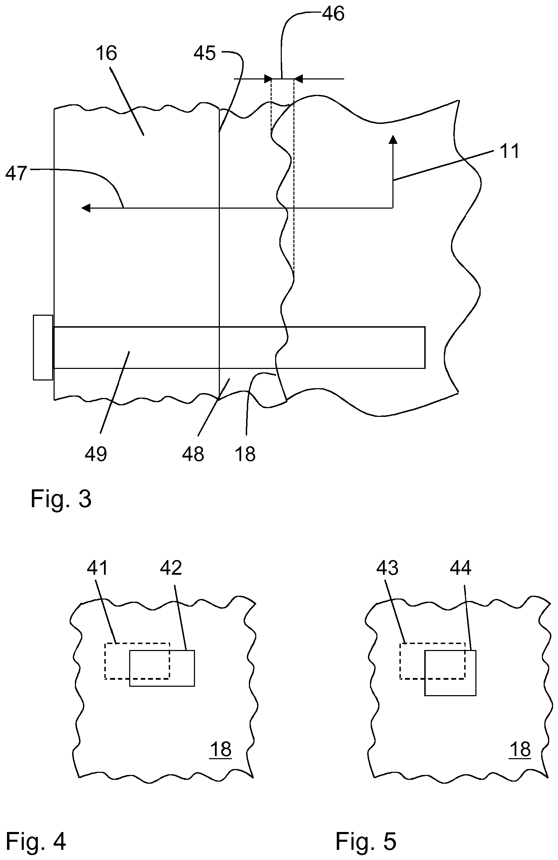

Eines der Montagewerkzeuge 34 ist als Sensor, beispielsweise als Laserscanner ausgeführt, mittels welchem die relative Lage der Trägerkomponente 20 gegenüber den Referenzelementen 13 bestimmt werden kann. Dies kann beispielsweise mit einem Verfahren durchgeführt werden, das in der nicht vorveröffentlichten europäischen Patentanmeldung der Anmelderin mit der Anmeldenummer EP16163399.5 beschrieben ist. Aus der relativen Lage der Trägerkomponente 20 gegenüber den Referenzelementen 13 kann die Position der Trägerkomponente 20 im Aufzugschacht 10 ermittelt werden. Ausgehend von der Position der Trägerkomponente 20 kann bestimmt werden, an welchen Stellen der Schachtwand 18 ein Schienenbügelunterteil 16 befestigt werden soll. Diese Stellen werden hier als vorgesehener Fixierungsbereich (41 in Fig. 4, 43 in Fig. 5) bezeichnet.

Mit dem genannten Laserscanner kann auch die Schachtwand 18, insbesondere ein vorgesehener Fixierungsbereich (41 in Fig. 4, 43 in Fig. 5) überprüft werden. Bei dieser Überprüfung wird mittels des Laserscanners die Ausdehnung der Schachtwand 18 senkrecht zur Schachtwand 18 (Richtung 17 in Fig. 3), also in horizontaler Richtung bestimmt. Auf die Überprüfung der des vorgesehenen Fixierungsbereich wird in Zusammenhang mit der Fig. 3 näher eingegangen.

Die Position der Trägerkomponente im Aufzugschacht kann auch mit Hilfe eines digitalen Modells der Aufzuganlage bestimmt werden. Dazu muss der gesamte Aufzugschacht beispielsweise mittels eines Laserscanners vermessen werden.

Eines der Montagewerkzeuge 34 ist als Werkzeug zum Aufrauen der Schachtwand 18, insbesondere als ein Werkzeug mit einer rotierenden Stahlbürste oder einem Winkelschleifer ausgeführt.

Eines der Montagewerkzeuge 34 ist als Werkzeug zum Säubern der Schachtwand 18, insbesondere als ein Werkzeug zum Absaugen der Schachtwand 18 oder zum Abgeben von Pressluft ausgeführt.

Eines der Montagewerkzeuge 34 ist als Werkzeug zum Auftragen von Klebstoff auf die Schachtwand 18 und/oder eine Anlagefläche (45 in Fig. 3) eines Schienenbügelunterteils 16 ausgeführt. Der Kleber ist dabei insbesondere als ein 2-komponentiger Kleber auf Epoxidharzbasis ausgeführt. Das genannte Werkzeug kann beispielsweise als ein so genannter Dispenser ausgeführt sein, bei dem die beiden Komponenten des Klebstoffs während des Austragens aus Vorratsbehältern für je eine der Komponenten, mittels eines so genannten Mischers gemischt werden.

Eines der Montagewerkzeuge 34 kann als Bohrwerkzeug, ähnlich einer Bohrmaschine, ausgestaltet sein. Durch Kopplung des Industrieroboters 24 mit einem solchen Bohrwerkzeug kann die Installationskomponente 22 dazu ausgestaltet werden, ein zumindest teilweise automatisiert gesteuertes Bohren von Befestigungslöchern in einer der Schachtwände 18 des Aufzugschachts 10 zu ermöglichen. Das Bohrwerkzeug kann hierbei von dem Industrieroboter 24 derart bewegt und gehandhabt werden, dass das Bohrwerkzeug mit einem Bohrer an einer vorgesehenen Position Löcher in die Schachtwand 18 des Aufzugschachts 10 bohrt, in die später Befestigungselemente in Form von Schrauben oder Schraubankern zur Fixierung von Schienenbügelunterteilen eingeschraubt werden.

Ein weiteres Montagewerkzeug 34 kann als Schrauber ausgestaltet, um zumindest teilautomatisch Schraubanker oder Schrauben in zuvor gebohrte Befestigungslöcher in die Schachtwand 18 des Aufzugschachts 10 einzuschrauben.

Ein weiteres Montagewerkzeug 34 kann als eine Nagelmaschine ausgestaltet sein, mittels welcher Nägel durch ein Schienenbügelunterteil 16 in die Schachtwand 18 geschossen werden können.

Ein weiteres Montagewerkzeug 34 ist als ein Greifer ausgestaltet, um zumindest teilautomatisch ein Schienenbügelunterteil 16 an der Schachtwand 18 zu fixieren

Ein weiteres Montagewerkzeug 34 kann als ein Bohrmeissel ausgeführt sein, mittels welchem kleinere Vorsprünge an der Schachtwand entfernt werden können.

An der Trägerkomponente 20 kann ferner eine Magazinkomponente 36 vorgesehen sein. Die Magazinkomponente 36 kann dazu dienen, zu installierende Schienenbügelunterteile 16 zu lagern und der Installationskomponente 22 bereitzustellen. In der Magazinkomponente 36 können auch Schraubanker oder Schrauben gelagert und bereitgestellt werden, die mithilfe der Installationskomponente 22 in vorgefertigte Befestigungslöcher in der Schachtwand 18 eingeschraubt werden können.

Zum Fixieren eines Schienenbügelunterteils 16 an der Schachtwand 18 wird zunächst von einer nicht dargestellten Steuerungseinrichtung eine Sollposition des Schienenbügelunterteils 16 und damit ein vorgesehener Fixierungsbereich (41 in Fig. 4, 43 in Fig. 5) bestimmt. Die Steuerungseinrichtung kennt die Position der Trägerkomponente 20, so dass der Industrieroboter 24 mit einem als Scanner ausgeführten Montagewerkzeug 34 den vorgesehenen Fixierungsbereich (41 in Fig. 4, 43 in Fig. 5) überprüfen kann. Bei der Überprüfung wird die Ausdehnung der Schachtwand 18 in einer senkrechten Richtung (47 in Fig. 3) zum Verlauf der Schachtwand 18 geprüft. Eine vorgegebene Prüfbedingung ist erfüllt, wenn ein maximaler Unterschied 46 der genannten Ausdehnung der Schachtwand 18 kleiner als ein Grenzwert ist. Es ist möglich, dass bei der genannten Prüfung kleinere Löcher, beispielsweise bis zu einem Durchmesser von 3 - 5 mm nicht berücksichtigt werden. Der Grenzwert, den der maximale Unterschied 46 nicht überschreiten darf, beträgt beispielsweise 1 bis 3 mm.

Wenn die genannte Prüfbedingung erfüllt ist, wird der vorgesehene Fixierungsbereich als der endgültige Fixierungsbereich übernommen und das Schienenbügelunterteil 16 wird im endgültigen Fixierungsbereich an der Schachtwand 18 fixiert.

Ist die genannte Prüfbedingung nicht erfüllt, so kann zumindest ohne weitere Vorarbeiten das Schienenbügelunterteil 16 nicht im vorgesehenen Fixierungsbereich an der Schachtwand fixiert werden. Wenn die Schachtwand 18 im vorgesehenen Fixierungsbereich nur kleinere Vorsprünge aufweist, können diese mit einem als Bohrmeissel ausgeführten Montagewerkzeug 34 entfernt und anschliessend eine erneute Überprüfung durchgeführt werden.

Wenn die Schachtwand 18 grössere Unebenheiten aufweist, so wird von der Steuerungseinrichtung ein möglicher Fixierungsbereich dadurch gesucht, dass der vorgesehene Fixierungsbereich leicht verschoben wird, so dass sich der neue vorgesehene Fixierungsbereich 42 in Fig. 4 ergibt. Anschliessend wird die beschriebene Überprüfung erneut durchgeführt. Ist dann die genannte Prüfbedingung erfüllt, dann wird der neue vorgesehene Fixierungsbereich als der endgültige Fixierungsbereich übernommen und das Schienenbügelunterteil 16 wird im endgültigen Fixierungsbereich an der Schachtwand 18 fixiert. Ist die Prüfbedingung beim neuen vorgesehenen Fixierungsbereich abermals nicht erfüllt, wird eine erneute Verschiebung durchgeführt.

Wenn einer oder mehrere der beschriebenen Verschiebungen des vorgesehenen Fixierungsbereichs nicht erfolgreich sind, kann die Steuerungseinrichtung die Form des vorgesehenen Fixierungsbereichs 43 verändern, so dass sich der neue vorgesehene Fixierungsbereich 44 in Fig. 5 ergibt. Der neue vorgesehene Fixierungsbereich 44 ist dabei wie dargestellt etwas breiter und dafür weniger hoch als der ursprüngliche vorgesehene Fixierungsbereich 43. Die möglichen Formen der vorgesehenen Fixierungsbereiche 44 ergeben sich aus den zur Verfügung stehenden verschiedenen Ausführungsformen von Schienenbügelunterteilen 16. Im in Fig. 5 dargestellten Beispiel geht der neue vorgesehenen Fixierungsbereich 44 über den ursprünglichen vorgesehenen Fixierungsbereich 43 hinaus, so dass eine erneute Überprüfung des neuen vorgesehenen Fixierungsbereich 44 durchgeführt wird. Ist dann die genannte Prüfbedingung erfüllt, dann wird der neue vorgesehene Fixierungsbereich als der endgültige Fixierungsbereich übernommen und das Schienenbügelunterteil 16 wird im endgültigen Fixierungsbereich an der Schachtwand 18 fixiert.

Wenn ein endgültiger Fixierungsbereich gefunden wurde, so wird zunächst der vorgesehene Fixierungsbereich mit Pressluft gesäubert oder abgesaugt. Anschliessend wird der vorgesehene Fixierungsbereich mit einem Montagewerkzeug 34, das eine rotierende Drahtbürste aufweist, oder einem als Winkelschleifer ausgeführten Montagewerkzeug 34 aufgeraut. Anschliessend kann optional eine Haftschicht auf den vorgesehenen Fixierungsbereich aufgetragen werden. Damit ist der vorgesehene Fixierungsbereich für das Fixieren des Schienenbügelunterteils vorbereitet, so dass mit einem als Werkzeug zum Auftragen von Klebstoff ausgeführten Montagewerkzeug 34 Klebstoff auf den vorgesehenen Fixierungsbereich der Schachtwand 18 und/oder die Anlagefläche (45 in Fig. 3) des Schienenbügelunterteils 16 aufgetragen wird. Die Dicke der aufgetragenen Klebstoffschicht 48 in Fig. 3 ist dabei vom Ergebnis der Überprüfung des vorgesehenen Fixierungsbereichs der Schachtwand 18 abhängig. Je grösser der maximale Unterschied der Ausdehnung der Schachtwand 18 ist, desto dicker ist die aufgetragene Klebstoffschicht.

Nachdem die Klebstoffschicht 48 aufgetragen ist, wird mit einem als Greifer ausgeführten Montagewerkzeug 34 das Schienenbügelunterteil 16 am endgültigen Fixierungsbereich fixiert.

Um das Schienenbügelunterteil 16 bis zum Abschluss des Aushärtens des Klebstoffs sicher an der Schachtwand 18 zu fixieren, kann mittels eines als Nagelmaschine ausgeführten Montagewerkzeugs 34 mit einem Nagel 49 zusätzlich an der Schachtwand 18 zu fixieren. Der Nagel 49 kann dabei insbesondere ohne ein vorbereitetes Loch durch das Schienenbügelunterteil 16 geschossen werden.

Um Sicherzustellen, dass das Schienenbügelunterteil bis zur weiteren Fixierung mit dem Nagel 49 in seiner vorgesehenen Position verbleibt, kann das Montagewerkzeug einen weiteren Arm aufweisen, mittels welchem das Schienenbügelunterteil bis zum Einbringen des Nagels gehalten werden kann.

Statt einen Nagel einzubringen, kann auch eine Schraube eingebracht werden, In diesem Fall muss vor der Fixierung des Schienenbügelunterteils ein Loch in die Schachtwand gebohrt werden. Ausserdem muss das Schienenbügelunterteil ein passendes Loch aufweisen, durch das die Schraube geführt werden kann. Darüber hinaus sind auch weitere Möglichkeiten der Fixierung des Schienenbügelunterteils während des Aushärten des Klebstoffs denkbar.

Beim Fixieren mehrerer Schienenbügel an der Schachtwand werden zuerst alle endgültigen Fixierungsbereiche im Aufzugschacht aufgeraut, dann alle endgültigen Fixierungsbereiche im Aufzugschacht gesäubert und anschliessend alle Schienenbügel an den Schachtwänden des Aufzugschachts fixiert. Das Aufrauen und Säubern wird dabei jeweils von oben nach unten durchgeführt.

Anstatt wie beschrieben die Schienenbügelunterteile mit einer Montagevorrichtung 14 zumindest teilautomatisch an den Schachtwänden 18 des Aufzugschachts zu befestigen, kann dies auch von einem Monteur von Hand mit Hilfe entsprechender Montagewerkzeugen durchgeführt werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zur Fixierung eines Schienenbügels (16) zur Halterung einer Führungsschiene (15) an einer Schachtwand (18) eines Aufzugschachts (10) einer Aufzuganlage (12),
**gekennzeichnet durch**
ein Aufbringen einer Klebstoffschicht (48), die in einem fixierten Zustand des Schienenbügels (16) zwischen einer Anlagefläche (45) des Schienenbügels (16) und einem endgültigen Fixierungsbereich (42, 44) der Schachtwand (18) angeordnet ist.

2. Verfahren nach Anspruch 1,
**dadurch gekennzeichnet, dass**
ein vorgesehener Fixierungsbereich (41, 43) der Schachtwand (18) überprüft wird und der vorgesehene Fixierungsbereich (41, 43) nur dann als endgültiger Fixierungsbereich (42, 44) ausgewählt wird, wenn eine vorgegebene Prüfbedingung erfüllt ist.

3. Verfahren nach Anspruch 2,
**dadurch gekennzeichnet, dass**
zur Überprüfung des vorgesehenen Fixierungsbereichs (41, 43) der Schachtwand (18) eine Ausdehnung der Schachtwand (18) im vorgesehenen Fixierungsbereich (41, 43) in einer Richtung (47) hauptsächlich senkrecht zur Schachtwand (18) erfasst wird.

4. Verfahren nach Anspruch 3,
**dadurch gekennzeichnet, dass**
die vorgegebene Prüfbedingung erfüllt ist, wenn ein maximaler Unterschied (46) der genannten Ausdehnung der Schachtwand (18) kleiner als ein Grenzwert ist.

5. Verfahren nach einem der Ansprüche 2, 3 oder 4,
**dadurch gekennzeichnet, dass**
eine Dicke der aufgebrachten Klebstoffschicht (48) vom Ergebnis der Überprüfung des vorgesehenen Fixierungsbereichs (41, 43) der Schachtwand (18) abhängig ist.

6. Verfahren nach einem der Ansprüche 2 bis 5,
**dadurch gekennzeichnet, dass**
in dem Fall, in dem die vorgegebene Prüfbedingung nicht erfüllt ist, der vorgesehene Fixierungsbereich (41, 43) angepasst wird.

7. Verfahren nach Anspruch 6,
**dadurch gekennzeichnet, dass**
in dem Fall, in dem der angepasste vorgesehene Fixierungsbereich (44) über den ursprünglich vorgesehenen Fixierungsbereich (43) hinausgeht, eine erneute Überprüfung durchgeführt wird.

8. Verfahren nach einem der Ansprüche 1 bis 7,
**dadurch gekennzeichnet, dass**
der endgültige Fixierungsbereich (42, 44) vor dem Anordnen des Schienenbügels (16) vorbehandelt wird.

9. Verfahren nach Anspruch 8,
**dadurch gekennzeichnet, dass**
der endgültige Fixierungsbereich (42, 44) aufgeraut wird.

10. Verfahren nach Anspruch 8 oder 9,
**dadurch gekennzeichnet, dass**
der endgültige Fixierungsbereich (42, 44) gesäubert wird.

11. Verfahren nach Anspruch 9 oder 10,
**dadurch gekennzeichnet, dass**
- zuerst alle endgültigen Fixierungsbereiche (42, 44) im Aufzugschacht (10) aufgeraut werden,
- dann alle endgültigen Fixierungsbereiche (42, 44) im Aufzugschacht (10) gesäubert werden und
- dann alle Schienenbügel (16) an den Schachtwänden (18) des Aufzugschachts (10) fixiert werden.

12. Verfahren nach einem der Ansprüche 1 bis 11,
**dadurch gekennzeichnet, dass**
der Schienenbügel (16) zusätzlich mittels eines Befestigungselements (49) an der Schachtwand (18) fixiert wird.

13. Verfahren nach einem der Ansprüche 1 bis 12,
**dadurch gekennzeichnet, dass**
die Fixierung des Schienenbügels (16) an der Schachtwand (18) mittels einer mechatronischen Installationskomponente (22) ausgeführt wird.

14. Aufzuganlage mit einem Aufzugschacht (10) und einer mittels eines Schienenbügels (16) an einer Schachtwand (18) des Aufzugschachts (18) fixierten Führungsschiene (15), **dadurch gekennzeichnet, dass**
in einem fixierten Zustand des Schienenbügels (16) zwischen einer Anlagefläche (45) des Schienenbügels (16) und einem endgültigen Fixierungsbereich (42, 44) der Schachtwand (18) eine Klebstoffschicht (48) angeordnet ist.

15. Aufzuganlage nach Anspruch 14,
**dadurch gekennzeichnet, dass**
der Schienenbügel (16) zusätzlich mittels eines Befestigungselements (49) an der Schachtwand (18) fixiert ist.

## Claims

1. Method for fixing a rail bracket (16) for mounting a guide rail (15) on a shaft wall (18) of an elevator shaft (10) of an elevator system (12),
**characterized in that**
an adhesive layer (48) is applied which, in a fixed state of the rail bracket (16), is arranged between a support surface (45) of the rail bracket (16) and a final fixing region (42, 44) of the shaft wall (18).

2. Method according to claim 1,
**characterized in that**
a planned fixing region (41, 43) of the shaft wall (18) is checked and the planned fixing region (41, 43) is selected as the final fixing region (42, 44) only if a specified test requirement is fulfilled.

3. Method according to claim 2,
**characterized in that**
for checking the planned fixing region (41, 43) of the shaft wall (18), an extension of the shaft wall (18) in the planned fixing region (41, 43) in a direction (47) mainly vertical to the shaft wall (18) is detected.

4. Method according to claim 3,
**characterized in that**
the specified test requirement is fulfilled if a maximum difference (46) of the mentioned extension of the shaft wall (18) is smaller than a limit value.

5. Method according to one of the claims 2, 3 or 4,
**characterized in that**
a thickness of the applied adhesive layer (48) depends on the result of the check of the planned fixing region (41, 43) of the shaft wall (18).

6. Method according to one of the claims 2 to 5,
**characterized in that**
in the case in which the specified test requirement is not fulfilled, the planned fixing region (41, 43) is adjusted.

7. Method according to claim 6,
**characterized in that**
in the case in which the adjusted planned fixing region (44) extends beyond the originally planned fixing region (43), a new check is performed.

8. Method according to one of the claims 1 to 7,
**characterized in that**
the final fixing region (42, 44) is pretreated before the rail bracket (16) is arranged.

9. Method according to claim 8,
**characterized in that**
the final fixing region (42, 44) is roughened.

10. Method according to claim 8 or 9,
**characterized in that**
the final fixing region (42, 44) is cleaned.

11. Method according to claim 9 or 10,
**characterized in that**
- first all final fixing regions (42, 44) in the elevator shaft (10) are roughened,
- then all final fixing regions (42, 44) in the elevator shaft (10) are cleaned, and
- then all rail brackets (16) are fixed to the shaft walls (18) of the elevator shaft (10).

12. Method according to one of the claims 1 to 11,
**characterized in that**
the rail bracket (16) is additionally fixed to the shaft wall (18) by means of a fixing element (49).

13. Method according to one of the claims 1 to 12,
**characterized in that**
the fixing of the rail bracket (16) to the shaft wall (18) is performed by means of a mechatronic installation component (22).

14. Elevator system having an elevator shaft (10) and a guide rail (15) which is fixed to a shaft wall (18) of the elevator shaft (18) by means of a rail bracket (16), **characterized in that**
in a fixed state of the rail bracket (16), an adhesive layer (48) is arranged between a support surface (45) of the rail bracket (16) and a final fixing region (42, 44) of the shaft wall (18).

15. Elevator system according to claim 14,
**characterized in that**
the rail bracket (16) is additionally fixed to the shaft wall (18) by means of a fixing element (49).

## Revendications

1. Procédé de fixation d'un étrier de rail (16) servant à maintenir un rail de guidage (15) sur une paroi de cage (18) d'une cage d'ascenseur (10) d'un système d'ascenseur (12),
**caractérisé par**
l'application d'une couche adhésive (48) qui, lorsque l'étrier de rail (16) est fixé, est disposée entre une surface d'appui (45) de l'étrier de rail (16) et une zone de fixation définitive (42, 44) de la paroi de cage (18).

2. Procédé selon la revendication 1,
**caractérisé en ce**
**qu'**une zone de fixation prévue (41, 43) de la paroi de cage (18) est contrôlée et que la zone de fixation prévue (41, 43) n'est sélectionnée comme zone de fixation définitive (42, 44) que lorsqu'une condition de contrôle prédéfinie est satisfaite.

3. Procédé selon la revendication 2,
**caractérisé en ce**
**que**, pour contrôler la zone de fixation prévue (41, 43) de la paroi de cage (18), une expansion de la paroi de cage (18) dans la zone de fixation prévue (41, 43), dans une direction (47) principalement perpendiculaire à la paroi de cage (18), est détectée.

4. Procédé selon la revendication 3,
**caractérisé en ce**
**que** la condition de contrôle prédéfinie est remplie lorsqu'une différence maximale (46) de ladite expansion de la paroi de cage (18) est inférieure à une valeur limite.

5. Procédé selon l'une des revendications 2, 3 ou 4,
**caractérisé en ce**
**que** l'épaisseur de la couche adhésive appliquée (48) dépend du résultat du contrôle de la zone de fixation prévue (41, 43) de la paroi de cage (18).

6. Procédé selon l'une des revendications 2 à 5,
**caractérisé en ce**
**que** dans le cas où la condition de contrôle prédéfinie n'est pas remplie, la zone de fixation prévue (41, 43) est adaptée.

7. Procédé selon la revendication 6,
**caractérisé en ce**
**que** dans le cas où la zone de fixation prévue adaptée (44) s'étend au-delà de la zone de fixation (43) prévue à l'origine, un nouveau contrôle est effectué.

8. Procédé selon l'une des revendications 1 à 7,
**caractérisé en ce**
**que** la zone de fixation définitive (42, 44) est prétraitée avant l'agencement de l'étrier de rail (16).

9. Procédé selon la revendication 8,
**caractérisé en ce**
**que** la zone de fixation définitive (42, 44) est rendue rugueuse.

10. Procédé selon la revendication 8 ou 9,
**caractérisé en ce**
**que** la zone de fixation définitive (42, 44) est nettoyée.

11. Procédé selon la revendication 9 ou 10,
**caractérisé en ce que**
- toutes les zones de fixation définitives (42, 44) dans la cage d'ascenseur (10) sont d'abord rendues rugueuses,
- toutes les zones de fixation définitives (42, 44) dans la cage d'ascenseur (10) sont ensuite nettoyées et
- tous les étriers de rail (16) sont ensuite fixés aux parois de cage (18) de la cage d'ascenseur (10).

12. Procédé selon l'une des revendications 1 à 11,
**caractérisé en ce**
**que** l'étrier de rail (16) est en outre fixé à la paroi de cage (18) au moyen d'un élément d'attache (49).

13. Procédé selon l'une des revendications 1 à 12,
**caractérisé en ce**
**que** la fixation de l'étrier de rail (16) à la paroi de cage (18) est effectuée au moyen d'un composant d'installation mécatronique (22).

14. Système d'ascenseur comportant une cage d'ascenseur (10) et un rail de guidage (15) fixé à une paroi de cage (10) de la cage d'ascenseur (18) au moyen d'un étrier de rail (16), **caractérisé en ce**
**que**, lorsque l'étrier de rail (16) est fixé, une couche adhésive (48) est disposée entre une surface d'appui (45) de l'étrier de rail (16) et une zone de fixation définitive (42, 44) de la paroi de cage (18).

15. Système d'ascenseur selon la revendication 14,
**caractérisé en ce**
**que** l'étrier de rail (16) est en outre fixé à la paroi de la cage (18) au moyen d'un élément d'attache (49).
